# EUROPEAN PATENT APPLICATION

(11) **EP 4 838 251 A1**
(43) Date of publication of application: **11.11.2026**
(21) Application number: 25175012.1
(22) Date of filing: 08.05.2025
(51) Int. Cl.: G01S 7/35, G01S 13/34, G01S 13/42, G01S 7/02, G01S 13/58

(54) **METHOD AND DEVICE FOR IDENTIFYING SWAYING OBJECTS IN RADAR DATA**

(71) Applicant: Axis AB, 223 69 Lund (SE)
(72) Inventor: Papadelis, Aras, 223 69 LUND (SE); Fors, Sebastian, 223 69 LUND (SE)
(74) Representative: AWA Sweden AB

(57) **Abstract**

A method is provided for identifying detections from swaying objects amongst a plurality of detections identified using a Time Division Multiplexed Multiple Input/Multiple Output, TDM-MIMO, Frequency Modulated Continuous Wave, FMCW, radar system including N ≥ 2 transmitter antennas, wherein each detection of the plurality of detections is associated with a respective velocity and range in relation to the radar system, and wherein the radar system has a maximum unambiguous velocity, *vₘₐₓ.* In the method, velocity disambiguation is performed on the plurality of detections to produce a disambiguated plurality of detections. Amongst the disambiguated plurality of detections, one or more first detections associated are identified with respective one or more first velocities and one or more first ranges, wherein the one or more first velocities are within a first interval from $\left⌈\frac{N - 1}{2}\right⌉ ⋅ 2 ⋅ {v}_{max}$ or from $- \left⌈\frac{N - 1}{2}\right⌉ ⋅ 2 ⋅ {v}_{max}$*.* For each first detection of the identified one or more first detections, wherein the first detection is associated with a first velocity of the one or more first velocities and a first range of the one or more first ranges, a condition is checked if there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ or within the second interval around the first velocity plus $\left⌈\frac{N - 1}{2}\right⌉ ⋅ 2 ⋅ {v}_{max}$ if the first velocity is within the first interval from $- \left⌈\frac{N - 1}{2}\right⌉ ⋅ 2 ⋅ {v}_{max}$*,* and wherein the second range is within a third interval around the first range. If the condition is fulfilled for the first detection, the first detection and the second detection are identified as detections from a swaying object.

## Description

### Technical field

The present invention relates to the field of monitoring an outdoor scene using a radar system and specifically to identifying detections from swaying objects amongst a plurality of detections identified using a radar system.

### Background

When using a Time Division Multiplexed Multiple Input/Multiple Output, TDM-MIMO, Frequency Modulated Continuous Wave, FMCW, radar system for monitoring an outdoor scene, radar detections of swaying objects, such as foliage, grass or other vegetation, are a source of false alarms. In prior art methods, such detections may be removed by machine learning-based classifiers. However, although being very efficient, such methods require large amounts of training data and use a non-negligible part of the time budget available in the radar system. Hence, new ways of identifying and removing detections of swaying objects are desired.

### Summary

It is an objective of the present invention to mitigate the above problems and provide new methods, a non-transitory computer readable memory, and a device for identifying detections from swaying objects amongst a plurality of detections.

According to a first aspect, a method is provided for identifying detections from swaying objects amongst a plurality of detections identified using a Time Division Multiplexed Multiple Input/Multiple Output, TDM-MIMO, Frequency Modulated Continuous Wave, FMCW, radar system including an even number *N* ≥ 2 transmitter antennas, wherein each detection of the plurality of detections is associated with a respective velocity and range in relation to the radar system, and wherein the radar system has a maximum unambiguous velocity, *vₘₐₓ*. In the method, velocity disambiguation is performed on the plurality of detections, thereby producing a disambiguated plurality of detections. Furthermore, amongst the disambiguated plurality of detections, one or more first detections associated are identified with respective one or more first velocities and one or more first ranges, wherein the one or more first velocities are within a first interval from $\left⌈\frac{N - 1}{2}\right⌉ ⋅ 2 ⋅ {v}_{max}$ and downwards or from $- \left⌈\frac{N - 1}{2}\right⌉ ⋅ 2 ⋅ {v}_{max}$ and upwards. For each first detection of the identified one or more first detections, wherein the first detection is associated with a first velocity of the one or more first velocities and a first range of the one or more first ranges, a condition is checked if there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and downwards or within the second interval around the first velocity plus $\left⌈\frac{N - 1}{2}\right⌉ ⋅ 2 ⋅ {v}_{max}$ if the first velocity is within the first interval from $- \left⌈\frac{N - 1}{2}\right⌉ ⋅ 2 ⋅ {v}_{max}$ and upwards, and wherein the second range is within a third interval around the first range. If the condition is fulfilled for the first detection, the first detection and the second detection are identified as detections from a swaying object.

According to a second aspect, a method is provided for identifying detections from swaying objects amongst a plurality of detections identified using a Time Division Multiplexed Multiple Input/Multiple Output, TDM-MIMO, Frequency Modulated Continuous Wave, FMCW, radar system including an odd number *N* ≥ 3 transmitter antennas, wherein each detection of the plurality of detections is associated with a respective velocity and range in relation to the radar system, and wherein the radar system has a maximum unambiguous velocity, *vₘₐₓ*. In the method, velocity disambiguation is performed on the plurality of detections, thereby producing a disambiguated plurality of detections. Furthermore, amongst the disambiguated plurality of detections, one or more first detections associated are identified with respective one or more first velocities and one or more first ranges, wherein the one or more first velocities are within a first interval from $\left⌈\frac{N - 1}{2}\right⌉ ⋅ 2 ⋅ {v}_{max}$ and upwards or from $- \left⌈\frac{N - 1}{2}\right⌉ ⋅ 2 ⋅ {v}_{max}$ and downwards. For each first detection of the identified one or more first detections, wherein the first detection is associated with a first velocity of the one or more first velocities and a first range of the one or more first ranges, a condition is checked if there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and upwards or within the second interval around the first velocity plus $\left⌈\frac{N - 1}{2}\right⌉ ⋅ 2 ⋅ {v}_{max}$ if the first velocity is within the first interval from $- \left⌈\frac{N - 1}{2}\right⌉ ⋅ 2 ⋅ {v}_{max}$ and downwards, and wherein the second range is within a third interval around the first range. If the condition is fulfilled for the first detection, the first detection and the second detection are identified as detections from a swaying object.

The method of the first aspect and the second aspect, respectively, provides a fast and computationally efficient way of identifying that a detection is a detection from a swaying object. Specifically. by identifying a pair of the first detection and second detection having respective velocities in the first interval and second interval, it can be concluded that the first detection and the second detection are detections from a swaying object.

It is to be noted, that the method of the first aspect is performed for all TDM-MIMO FMCW radar systems having even number *N* ≥ 2 antennas and the method of the second aspect is performed for all TDM-MIMO FMCW radar systems having odd number *N* ≥ 3 antennas regardless of number of transmitter antennas included. However, for radar systems including *N* ≥ 3 transmitter antennas, further checks may be suitable as will be described further in the detailed description.

The method of the first aspect may further comprise suppressing each second detection identified as a detection from a swaying object.

The method of the first aspect may further comprise suppressing each first detection corresponding to a second detection identified as detection from a swaying object.

According to a second aspect, a non-transitory computer-readable storage medium is provided having stored thereon instructions for implementing the method according to the method of the first aspect, when executed in a device having processing capabilities.

According to a third aspect, a device is provided for identifying detections from swaying objects amongst a plurality of detections identified using a Time Division Multiplexed Multiple Input/Multiple Output, TDM-MIMO, Frequency Modulated Continuous Wave, FMCW, radar system, wherein each detection of the plurality of detections is associated with a respective velocity and range in relation to the radar system, and wherein the radar system has a maximum unambiguous velocity, *vₘₐₓ*, the device comprising circuitry configured to execute functions for performing the method of the first aspect.

It is to be understood that this invention is not limited to the particular component parts of the device described or acts of the method described as such devices and methods may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Figure 1 is a flow chart of a method for identifying detections from swaying objects amongst a plurality of detections.
Figure 2 illustrates output from two discrete Fourier transforms performed on signals as received and on the signals with the sign is changed on the signals originating from one of the transmitter antennas, respectively.
Figure 3 illustrates a range Doppler representation of detections for a time interval after performing velocity disambiguation.
Figure 4 schematically illustrates a device for identifying detections from swaying objects amongst a plurality of detections.

### Detailed description

The present invention will now be described more fully hereinafter with reference to the accompanying drawings, in which embodiments of the invention are shown.

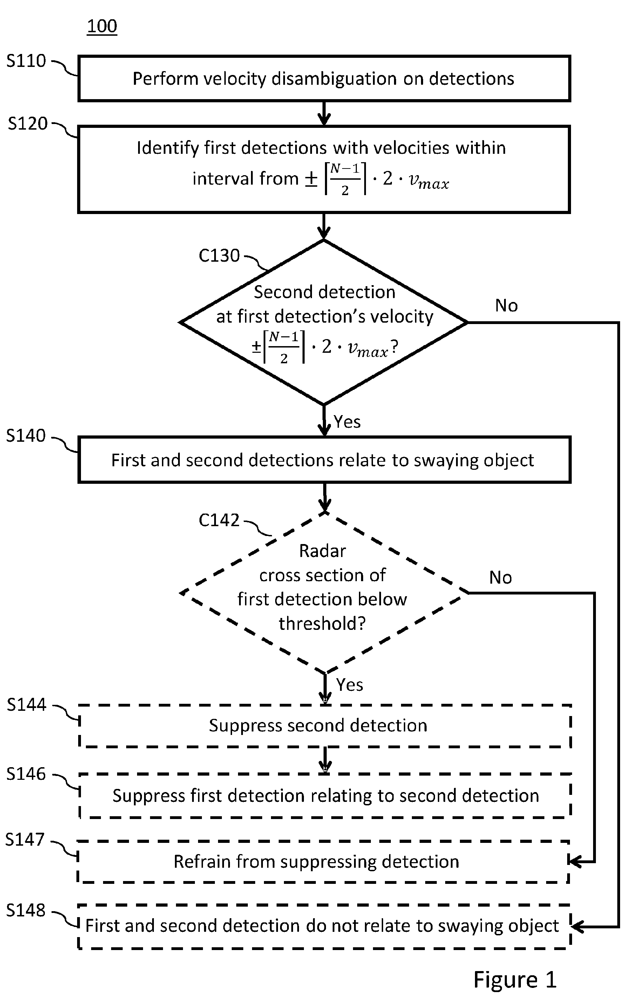

Embodiments of a method 100 for identifying detections from swaying objects amongst a plurality of detections identified using a Time Division Multiplexed Multiple Input/Multiple Output, TDM-MIMO, Frequency Modulated Continuous Wave, FMCW, radar system including *N*≥2 transmitter antennas, wherein each detection of the plurality of detections is associated with a respective velocity and range in relation to the radar system, and wherein the radar system has a maximum unambiguous velocity, *vₘₐₓ,* will now be described in relation to the flow chart in Figure 1.

In TDM-MIMO, radars that use FMCW transmission, the maximum unambiguous velocity *vₘₐₓ* is dictated by various system parameters. For a radar system with two transmitter antennas, if an object moves at an actual velocity *v*₁ away (positive velocity) from the radar faster than *vₘₐₓ* (but slower than or equal to *2 · vₘₐₓ*) it may appear as if it is moving the opposite direction with an apparent velocity *v*₂ = *v*₁ *-* 2 · *vₘₐₓ*, and if it moves at an actual velocity *v*₁ faster than the *vₘₐₓ* towards (negative velocity) the radar (but slower than or equal to -2 · *vₘₐₓ*), it may appear to move at an apparent velocity *v*₂ = *v*₁ *+* 2 · *vₘₐₓ.* This is an inherent consequence of the type of signal processing that is used for FMCW radars in TDM-MIMO systems. The phenomenon is called doppler ambiguity, doppler aliasing, velocity disambiguation, or velocity folding (because the velocity seems to fold from the max positive value and appear with negative value).

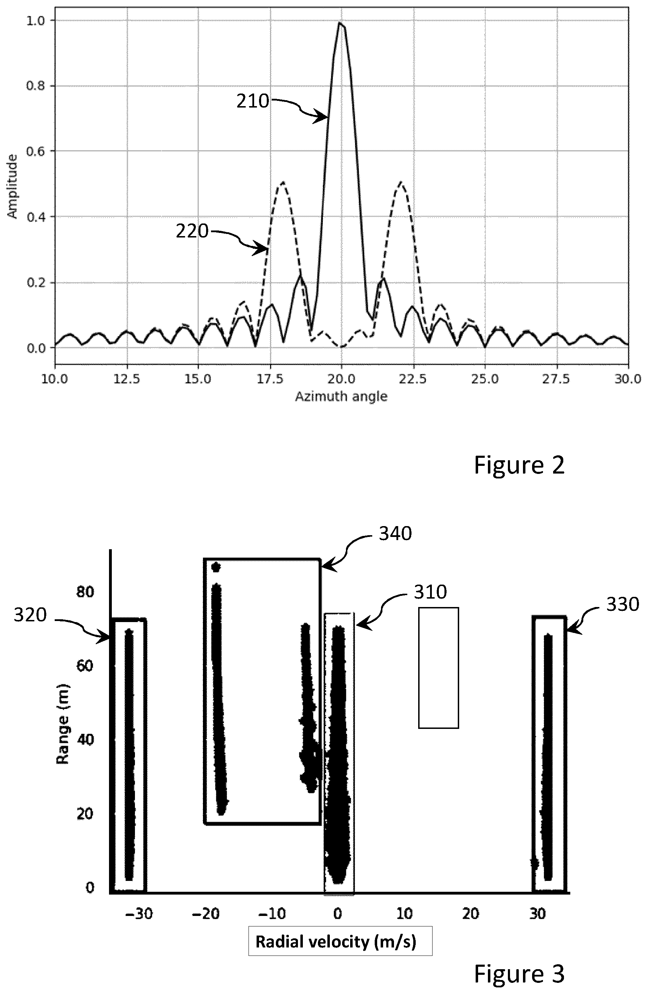

To overcome the ambiguities for velocities higher than *vₘₐₓ*, a known signal processing method may be used which is sometimes called velocity disambiguation or velocity folding detection. The method is based on the observation that, for example if there are two transmitter antennas (*N* = 2) that send in a time interleaved manner, a discrete Fourier transform (DFT) may be performed on the signal phases on receiver antennas. For a received signal that has certain range and an apparent velocity (which may have folded) a first DFT is performed on the signals as they were received on the antennas to form a first hypothesis, and then the sign is changed on the signals originating from the transmission of one of the transmitter antenna and a second DFT is performed to form a second hypothesis. When the output of the first DFT and second DFT are compared, one of them has a peak with a higher magnitude than the other. Reference is made to Figure 2 illustrating the form of the two DFTs, which will always be the same provided that there is only one object at a given distance and the radar signal is significantly higher than noise. A first DFT 210 will have a single high peak and a second DFT 220 will have two higher peaks, wherein the single high peak will have a higher magnitude than the two higher peaks. Depending on whether the signal velocity has folded or not, a different DFT will have the higher magnitude. If the peak with the higher magnitude comes from the case where the sign was not changed, this is an indication that the velocity was not folded and the correct actual velocity *v*₁ is the same as the apparent velocity *v*₂. If the peak with the higher magnitude comes from the case where the sign was changed, this is an indication that the velocity was folded. If the apparent velocity *v*₂ was positive, 2 · *vₘₐₓ* is subtracted from the apparent velocity *v*₂ to arrive at the correct actual velocity *v*₁ = *v*₂ *-* 2 · *vₘₐₓ*, and if the apparent velocity *v*₂ was negative, 2 · *vₘₐₓ* is added to the apparent velocity *v*₂ to arrive at the correct actual velocity *v*₁ = *v*₂ *+* 2 · *vₘₐₓ*.

Generally, for a system including N transmitter antennas that send in a time interleaved manner, the *i*: *th* hypothesis (*i* = 1, 2, 3 ... , *N)* is given by: 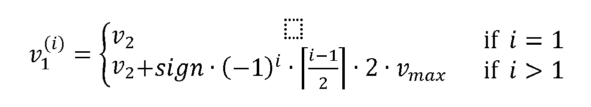 where: $sign = \left\{\begin{matrix}- 1 & if {v}_{2} > 0 \\ + 1 & if {v}_{2} < 0\end{matrix}\right. ,$ and $\left⌈x\right⌉ = the least integer \geq x$ (ceiling function) This generates the following pattern for *v*₂ > 0: ${v}_{1}^{\left(1\right)} = {v}_{2}$ ${v}_{1}^{\left(2\right)} = {v}_{2} - 2 ⋅ {v}_{max}$ ${v}_{1}^{\left(3\right)} = {v}_{2} + 2 ⋅ {v}_{max}$ ${v}_{1}^{\left(4\right)} = {v}_{2} - 4 ⋅ {v}_{max}$ ${v}_{1}^{\left(5\right)} = {v}_{2} + 4 ⋅ {v}_{max}$ ${v}_{1}^{\left(6\right)} = {v}_{2} - 6 ⋅ {v}_{max}$ $\begin{matrix}{v}_{1}^{\left(7\right)} = {v}_{2} + 6 ⋅ {v}_{max} \\ ⋮\end{matrix}$ and the following pattern for *v*₂ < 0: ${v}_{1}^{\left(1\right)} = {v}_{2}$ ${v}_{1}^{\left(2\right)} = {v}_{2} + 2 ⋅ {v}_{max}$ ${v}_{1}^{\left(3\right)} = {v}_{2} - 2 ⋅ {v}_{max}$ ${v}_{1}^{\left(4\right)} = {v}_{2} + 4 ⋅ {v}_{max}$ ${v}_{1}^{\left(5\right)} = {v}_{2} - 4 ⋅ {v}_{max}$ ${v}_{1}^{\left(6\right)} = {v}_{2} + 6 ⋅ {v}_{max}$ $\begin{matrix}{v}_{1}^{\left(7\right)} = {v}_{2} - 6 ⋅ {v}_{max} \\ ⋮\end{matrix}$

A description of this is found e.g. in "Enhancement of Doppler Unambiguity for Chirp-Sequence Modulated TDM-MIMO Radars" by F. Roos et al, IEEE 2018.

The method 100 utilizes a realization that for weak signals that are just strong enough to make it above a threshold over which a signal is considered to correspond to a detection, the contribution from noise fluctuation is so large that, when velocity disambiguation has been performed, it is not possible to identify which hypothesis is correct or the wrong hypothesis is selected due to the influence of noise. It has further been realized that signals caused by vegetation, such as foliage, grass etc., typically have this property. Vegetation is composed of a lot of leaves or straws that are almost stationary, i.e. their actual velocity *v*₁ is almost zero. Due to the weak signal vegetation generates, after performing velocity disambiguation in relation to *N* ≥ 2 radar transmitters, it may appear at an apparent velocity of both *v*₂ ≈ 0, and some or all of ${v}_{2} \approx \pm \left⌈\frac{n - 1}{2}\right⌉ ⋅ 2 ⋅ {v}_{max}$ for *n* = 2, 3, ..., *N*. This is illustrated in Figure 3 showing a range Doppler representation for a time interval after performing velocity disambiguation in relation to a system having two radar transmitters. However, as weak signals from vegetation with velocity at about 0 m/s may appear at an apparent velocity of both *v*₂ ≈ 0, and one or both of *v*₂ ≈ ±2 · *vₘₐₓ* after disambiguation in such a system, not all power values in the range Doppler representation after velocity disambiguation in Figure 3 will relate to real objects. The illustration in Figure 3 relates to a system where *vₘₐₓ* is 16 m/s. Vegetation with a correct velocity of about 0 m/s appears as detections within a first box 310 at an apparent velocity of *v*₂ ≈ 0, within a second box 320 at apparent velocity of *v*₂ ≈ 2 · 16, and within a third box 330 at an apparent velocity of *v*₂ ≈ -2 · 16 identified in Figure 3. Detections within the fourth box 340 relate to detections of objects where the velocity has been correctly deduced.

A range Doppler representation for a time interval is a two-dimensional matrix of radar data in the form of power values for reflections from objects located at different range (radial distance) along a first axis (dimension), e.g. vertical y-axis, and having different radial velocities along a second axis (dimension), e.g. horizontal x-axis. More specifically, for each of a sequence of consecutive range intervals, e.g. starting at 0 and up to a maximum range, along the first axis, a power value is provided for each of a sequence of consecutive velocity intervals, e.g. starting at a maximum negative velocity up to a maximum positive velocity. For example, the maximum negative velocity and the maximum positive velocity have the same absolute velocity. In relation to range-Doppler representations, velocity intervals for a range interval may be denoted as 'bins' and zero velocity may be denoted 'DC Doppler'. A range interval is an interval from a lower range to an upper range. Similarly, a velocity interval is an interval from a lower velocity to an upper velocity. Hence, a power value for a velocity interval at a range interval relates to all velocities from the lower velocity to the upper velocity of the velocity interval for all ranges from the lower range to the upper range of the range interval.

By detection here is typically meant that a power value in a velocity interval at a range interval is considered to relate to an object. For example, this may be determined based on a power value being over a power threshold which generally means herein that the power values are considered high enough to relate to an object. For example, the power threshold may be based on a level of noise and the power values being over a power threshold could then mean that a signal to noise ratio of the power value being over an SNR threshold. The power threshold (SNR threshold) may be different for different velocity intervals and the power threshold (SNR threshold) of one velocity interval may depend on the power values of other velocity intervals. The power threshold (SNR threshold) may be selected to provide probability of detection of a moving object is higher than a desired detection probability and a probability that false detections is lower than a desired false detection probability.

Turning to Figure 1, in the method 100, velocity disambiguation, is first performed S110 on the plurality of detections, thereby producing a disambiguated plurality of detections. Velocity disambiguation for a radar system including two transmitter antennas may comprise correcting a velocity associated with a detection by 2 · *vₘₐₓ* being added to or subtracted from the velocity based on comparison of a first DFT on phases of a radar signal as received at antennas of the radar system, which radar signal corresponds to the detection, with a second DFT on the phases of the radar signal as received at the antennas of the radar system after changing sign of a phase of the radar signal as received at one or more antenna of the antennas of the radar system as described hereinabove.

Turning to Figure 2, two DFTs are shown in relation to signals from two radar transmitters. If the DFT 210 with the single peak relates to the DFT of the signals as received, this is an indication that the velocity was not folded and the correct actual velocity *v*₁ is the same as the apparent velocity *v*₂. If instead, the DFT 210 with the single peak relates to the DFT of the signals where the sign was changed for one signal, this is an indication that the velocity was folded. In such a case, if the apparent velocity *v*₂ > 0 is positive, the correct actual velocity *v*₁ is *v*₂ - 2 · *vₘₐₓ*, and if the apparent velocity *v*₂ < 0 is negative the correct actual velocity *v*₁ is *v*₂ + 2 · *vₘₐₓ*.

For an even number *N* ≥ 2 antennas, amongst the disambiguated plurality of detections, one or more first detections are then identified S120, which first detections are associated with respective one or more first velocities and one or more first ranges, wherein the one or more first velocities are within a first interval from $\left⌈\frac{N - 1}{2}\right⌉ ⋅ 2 ⋅ {v}_{max}$ and downwards or from $- \left⌈\frac{N - 1}{2}\right⌉ ⋅ 2 ⋅ {v}_{max}$ and upwards. The one or more first detections are candidates for detections relating to erroneous detections due to velocity disambiguation of detections of swaying objects having velocity close to 0.

For an odd number *N* ≥ 3 antennas, amongst the disambiguated plurality of detections, one or more first detections are then identified S120, which first detections are associated with respective one or more first velocities and one or more first ranges, wherein the one or more first velocities are within a first interval from $\left⌈\frac{N - 1}{2}\right⌉ ⋅ 2 ⋅ {v}_{max}$ and upwards or from $- \left⌈\frac{N - 1}{2}\right⌉ ⋅ 2 ⋅ {v}_{max}$ and downwards. The one or more first detections are candidates for detections relating to erroneous detections due to velocity disambiguation of detections of swaying objects having velocity close to 0.

The first interval is used to take into account measurement errors and also the fact that velocity ambiguation is in relation to swaying objects which has a velocity that may be within an interval around zero velocity. If objects swaying at a velocity of ±2 m/s, the interval should be 2 m/s.

For an even number *N* ≥ 2 antennas, for each first detection of the identified one or more first detections, wherein the first detection is associated with a first velocity of the one or more first velocities and a first range of the one or more first ranges a condition C130 is checked, namely if there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and downwards or within the second interval around the first velocity plus $\left⌈\frac{N - 1}{2}\right⌉ ⋅ 2 ⋅ {v}_{max}$ if the first velocity is within the first interval from $- \left⌈\frac{N - 1}{2}\right⌉ ⋅ 2 ⋅ {v}_{max}$ and upwards. Furthermore, the second range should also be within a third interval around the first range. If the condition is fulfilled the first detection and the second detection are identified S140 as detections from a swaying object.

For an odd number *N* ≥ 3 antennas, for each first detection of the identified one or more first detections, wherein the first detection is associated with a first velocity of the one or more first velocities and a first range of the one or more first ranges a condition C130 is checked, namely if there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and upwards or within the second interval around the first velocity plus $\left⌈\frac{N - 1}{2}\right⌉ ⋅ 2 ⋅ {v}_{max}$ if the first velocity is within the first interval from $- \left⌈\frac{N - 1}{2}\right⌉ ⋅ 2 ⋅ {v}_{max}$ and downwards. Furthermore, the second range should also be within a third interval around the first range. If the condition is fulfilled the first detection and the second detection are identified S140 as detections from a swaying object.

The second interval may be based on the first interval and may for example be set to the same size as the first interval. Additionally or alternatively, the second interval may be set such that velocities above an expected velocity of objects that are of interest such that detections in relation to the objects of interest are not identified as a detection of a swaying object. For example, the first interval may be set to velocities lower than velocity of walking.

The third interval may be based on the range resolution, i.e. the size of the range intervals within which power values are determined for different velocity intervals as illustrated in a Range Doppler representation. For example, the third interval may be set to the size of each velocity interval.

The second detection may further be suppressed S144. Suppression may for example mean that such a second detection is removed or disregarded in relation to visualization, further analysis, or other use of the detections. This is advantageous since detections from swaying objects such as vegetation are typically of little or no interest in a system for monitoring using radar. Hence, removing or disregarding such detections will reduce any distraction, interference or other negative effects they may cause.

Additionally or alternatively, the first detection corresponding to the second detection may be suppressed S146. The first detection corresponding to the second detection is an identified erroneous detection due to velocity disambiguation of the second detection identified to be from a swaying object. Suppressing the second object is advantageous since such a detection is typically of no interest in a system for monitoring using radar. Hence, removing or disregarding such detections will reduce any distraction, interference or other negative effects they may cause.

In the method 100 the second detection may be suppressed S144 only on the further condition C142 that the second detection has a radar cross section (RCS) that is below a threshold value. The threshold value on the radar cross section is preferably set based on the expected radar cross section for objects that are of interest to monitor in the radar system. If the second detection has a radar cross section that is below a threshold value, suppressing the second detection corresponding to the first detection is refrained from S148. Similarly, the first detection corresponding to the first detection may be suppressed S146 only on the further condition C142 that the second detection has a radar cross section that is below a threshold value. If the second detection has a radar cross section that is below a threshold value, suppressing the first detection corresponding to the first detection is refrained from S147. For example, if the objects that are of interest to monitor in the radar system are cars, the threshold value for the radar cross section may be set such that detections in relation to cars are not identified as a swaying object. This can be achieved since cars generally have higher radar cross section than vegetation. A radar cross section of 0.5 m² would have this result.

In addition to a velocity and range in relation to the radar system, a TDM-MIMO FMCW radar system, may further include a respective horizontal angle in relation to the radar system for each detection. Each first detection of the one or more first detections is then associated with a first horizontal angle. Furthermore, the condition C142 for the first detection and the second detection being identified S140 as relating to a swaying object may then further comprise that the second detection needs to be associated with a second horizontal angle that is within a fourth interval around the first horizontal angle.

The fourth interval may be set based on the angle resolution of the radar system, i.e. the size of angle intervals within which power values are determined for different range intervals and velocity intervals as illustrated in a Range Doppler representation. For example, the fourth interval may be set to the size of each angle interval. In alternative, the fourth interval may be based on the of uncertainty of the azimuth angle *θ* and is expressed in units of the term *σ_{θ}* which is the standard deviation of the azimuth angle. The term *σ_{θ}* is unique for the radar system and may be determined through measurement. In alternative, the fourth interval may be a fixed interval such as 1°.

It is to be noted that the description hereinabove of the method 100 in relation to Figure 1 is in relation velocity ambiguation and identification of detections from swaying objects amongst a plurality of detections in relation to *N* radar transmitter antennas, where the method differs as described depending on if the number of transmitter antennas in total is even or odd. If there are only two transmitter antennas in total, there are no further possible erroneously disambiguated velocities for swaying objects than around ±2 *· vₘₐₓ* as checked in the method 100. In case there are *N* ≥ 3 radar transmitter antennas, further steps may be performed to identify further possible erroneously disambiguated velocities for swaying objects. Specifically, the additional steps may be that for some or all of *n* = 2, 3, ... , *N* - 1, amongst the disambiguated plurality of detections, one or more first detections are then identified associated with respective one or more first velocities and one or more first ranges, wherein the one or more first velocities are within a first interval from $\left⌈\frac{n - 1}{2}\right⌉ ⋅ 2 ⋅ {v}_{max}$ and downwards or from $- \left⌈\frac{n - 1}{2}\right⌉ ⋅ 2 ⋅ {v}_{max}$ and upwards for even values of n, or wherein the one or more first velocities are within a first interval from $\left⌈\frac{n - 1}{2}\right⌉ ⋅ 2 ⋅ {v}_{max}$ and upwards or from $- \left⌈\frac{n - 1}{2}\right⌉ ⋅ 2 ⋅ {v}_{max}$ and downwards for odd values of n. For each first detection of the identified one or more first detections, wherein the first detection is associated with a first velocity of the one or more first velocities and a first range of the one or more first ranges, a condition is checked if there, amongst the plurality of detections, is a second detection associated with a second velocity and a second range. For even values of n the second velocity should be within a second interval around the first velocity minus $\left⌈\frac{n - 1}{2}\right⌉ ⋅ 2 {v}_{max}$ if the first velocity is within the first interval from $\left⌈\frac{n - 1}{2}\right⌉ ⋅ 2 {v}_{max}$ and downwards or within the second interval around the first velocity plus $\left⌈\frac{n - 1}{2}\right⌉ ⋅ 2 {v}_{max}$ if the first velocity is within the first interval from $- \left⌈\frac{n - 1}{2}\right⌉ ⋅ 2 {v}_{max}$ and upwards. For odd values of n the second velocity should be within a second interval around the first velocity minus $\left⌈\frac{n - 1}{2}\right⌉ ⋅ 2 {v}_{max}$ if the first velocity is within the first interval from $\left⌈\frac{n - 1}{2}\right⌉ ⋅ 2 {v}_{max}$ and upwards or within the second interval around the first velocity plus $\left⌈\frac{n - 1}{2}\right⌉ ⋅ 2 {v}_{max}$ if the first velocity is within the first interval from $- \left⌈\frac{n - 1}{2}\right⌉ ⋅ 2 {v}_{max}$ and downwards. The second range should be within a third interval around the first range. In embodiments, if the condition is fulfilled for the first detection for at least two values of n, the first detection and the corresponding second detection are identified as detections from a swaying object. By this, the risk for erroneous identification of correctly disambiguated detections from objects other than swaying objects as detections from swaying objects is reduced.

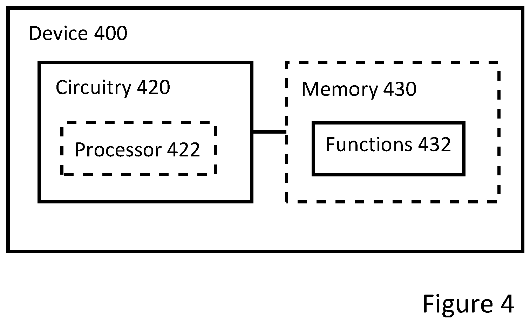

Figure 4 shows a block diagram in relation to embodiments of a device 400 for identifying detections from swaying objects amongst a plurality of detections identified using a TDM-MIMO FMCW radar system, wherein each detection of the plurality of detections is associated with a respective velocity and range in relation to the radar system, and wherein the radar system has a maximum unambiguous velocity, *vₘₐₓ*.

The device 400 comprises a circuitry 420. The circuitry 420 is configured to carry out functions 432 of the device 400. The circuitry 420 may include a processor 422, such as for example a central processing unit (CPU), graphical processing unit (GPU), tensor processing unit (TPU), microcontroller, or microprocessor. The processor 422 is configured to execute program code. The program code may for example be configured to carry out the functions of the device 400.

The device 400 may further comprise a memory 430. The memory 430 may be one or more of a buffer, a flash memory, a hard drive, a removable media, a volatile memory, a non-volatile memory, a random access memory (RAM), or another suitable device. In a typical arrangement, the memory 430 may include a non-volatile memory for long term data storage and a volatile memory that functions as device memory for the circuitry 420. The memory 430 may exchange data with the circuitry 420 over a data bus. Accompanying control lines and an address bus between the memory 430 and the circuitry 420 also may be present.

Functions of the device 400 may be embodied in the form of executable logic routines (e.g., lines of code, software programs, etc.) that are stored on a non-transitory computer readable medium (e.g., the memory 430) of the device 400 and are executed by the circuitry 420 (e.g., using the processor 422). Furthermore, the functions of the device 400 may be a stand-alone software application or form a part of a software application that carries out additional tasks related to the device 400. The described functions may be considered a method that a processing unit, e.g., the processor 422 of the circuitry 420 is configured to carry out. Also, while the described functions may be implemented in software, such functionality may as well be carried out via dedicated hardware or firmware, or some combination of hardware, firmware and/or software.

The circuitry 420 is configured to execute the functions 432 for performing the method 100 as described in relation to Figure 1. The detailed description of the acts of the method 100 described in relation to Figure 1 hereinabove apply also for the functions 432 of the device 400. Furthermore, the optional additional features of the method 100 described in relation to Figure 1 hereinabove, when applicable, apply also to the device 400.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method (100) for identifying detections from swaying objects amongst a plurality of detections identified using a Time Division Multiplexed Multiple Input/Multiple Output, TDM-MIMO, Frequency Modulated Continuous Wave, FMCW, radar system including an even number *N* ≥ 2 transmitter antennas, wherein each detection of the plurality of detections is associated with a respective velocity and range in relation to the radar system, and wherein the radar system has a maximum unambiguous velocity, *vₘₐₓ*, comprising:
performing (S110) velocity disambiguation on the plurality of detections, thereby producing a disambiguated plurality of detections;
identifying (S120), amongst the disambiguated plurality of detections, one or more first detections associated with respective one or more first velocities and one or more first ranges, wherein the one or more first velocities are within a first interval from $\left⌈\frac{N - 1}{2}\right⌉ ⋅ 2 ⋅ {v}_{max}$ and downwards or from $- \left⌈\frac{N - 1}{2}\right⌉ ⋅ 2 ⋅ {v}_{max}$ and upwards;
for each first detection of the identified one or more first detections, wherein the first detection is associated with a first velocity of the one or more first velocities and a first range of the one or more first ranges:
on condition (C130) that there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and downwards or within the second interval around the first velocity plus $\left⌈\frac{N - 1}{2}\right⌉ ⋅ 2 ⋅ {v}_{max}$ if the first velocity is within the first interval from $- \left⌈\frac{N - 1}{2}\right⌉ ⋅ 2 ⋅ {v}_{max}$ and upwards, and wherein the second range is within a third interval around the first range:
identifying (S140) the first detection and the second detection as detections from a swaying object.

2. A method (100) for identifying detections from swaying objects amongst a plurality of detections identified using a Time Division Multiplexed Multiple Input/Multiple Output, TDM-MIMO, Frequency Modulated Continuous Wave, FMCW, radar system including an odd number *N* ≥ 3 transmitter antennas where , wherein each detection of the plurality of detections is associated with a respective velocity and range in relation to the radar system, and wherein the radar system has a maximum unambiguous velocity, *vₘₐₓ*, comprising:
performing (S110) velocity disambiguation on the plurality of detections, thereby producing a disambiguated plurality of detections;
identifying (S120), amongst the disambiguated plurality of detections, one or more first detections associated with respective one or more first velocities and one or more first ranges, wherein the one or more first velocities are within a first interval from $\left⌈\frac{N - 1}{2}\right⌉ ⋅ 2 ⋅ {v}_{max}$ and upwards or from $- \left⌈\frac{N - 1}{2}\right⌉ ⋅ 2 ⋅ {v}_{max}$ and downwards;
for each first detection of the identified one or more first detections, wherein the first detection is associated with a first velocity of the one or more first velocities and a first range of the one or more first ranges:
on condition (C130) that there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and upwards or within the second interval around the first velocity plus $\left⌈\frac{N - 1}{2}\right⌉ ⋅ 2 ⋅ {v}_{max}$ if the first velocity is within the first interval from $- \left⌈\frac{N - 1}{2}\right⌉ ⋅ 2 ⋅ {v}_{max}$ and downwards, and wherein the second range is within a third interval around the first range:
identifying (S140) the first detection and the second detection as detections from a swaying object.

3. The method (100) of claim 1 or 2, further comprising:
suppressing (S144) the second detection.

4. The method (100) of any one of the previous claims, further comprising:
suppressing (S146) the first detection corresponding to the second detection.

5. The method (100) of claim 3, wherein suppressing (S144) the second detection is performed only on the further condition (C142) that the first detection has a radar cross section that is below a threshold value.

6. The method (100) of claim 4, wherein suppressing (S146) the first detection is performed only on the further condition (C142) that the second detection has a radar cross section that is below a threshold value.

7. The method (100) of any one of the previous claims, wherein each detection of the plurality of detections is further associated with a respective angle in relation to the radar system, wherein the one or more first detections are associated with respective one or more first horizontal angles, wherein the first detection is associated with a first horizontal angle of the one or more first horizontal angles, and wherein, in the condition (C130), the second detection is associated with a second horizontal angle, such that the second horizontal angle is within a fourth interval around the first horizontal angle.

8. The method (100) of claim 7, wherein the fourth interval is set based on the angle resolution of the radar system.

9. The method (100) of any one of the previous claims, wherein the first interval is set based on *vₘₐₓ*.

10. The method (100) of any one of the previous claims, wherein second interval is set based on *vₘₐₓ*.

11. The method (100) of any one of the previous claims, wherein third interval is set based on the range resolution of the radar system.

12. The method (100) of any one of the previous claims, wherein velocity disambiguation on the plurality of detections comprises correcting a velocity associated with a detection by $\left⌈\frac{N - 1}{2}\right⌉ ⋅ 2 ⋅ {v}_{max}$ being added to or subtracted from the velocity based on comparison of a first discrete Fourier transform on phases of a radar signal as received at antennas of the radar system, which radar signal corresponds to the detection, with a second discrete Fourier transform on the phases of the radar signal as received at the antennas of the radar system after changing sign of a phase of the radar signal as received at one or more antenna of the antennas of the radar system.

13. A non-transitory computer readable storage medium having stored thereon instructions for implementing the method according to any one of claims 1 to 12, when executed in a device having processing capabilities.

14. A device (400) for identifying detections from swaying objects amongst a plurality of detections identified using a Time Division Multiplexed Multiple Input/Multiple Output, TDM-MIMO, Frequency Modulated Continuous Wave, FMCW, radar system including N transmitter antennas, wherein each detection of the plurality of detections is associated with a respective velocity and range in relation to the radar system, and wherein the radar system has a maximum unambiguous velocity, *vₘₐₓ*, the device comprising circuitry (420) configured to execute functions (432) for implementing the method according to any one of claims 1 to 12.

## Amended claims

### Amended claims in accordance with Rule 137(2) EPC.

1. A method (100) for identifying detections from swaying objects amongst a plurality of detections identified using a Time Division Multiplexed Multiple Input/Multiple Output, TDM-MIMO, Frequency Modulated Continuous Wave, FMCW, radar system including an even number *N* ≥ 2 transmitter antennas, wherein each detection of the plurality of detections is associated with a respective velocity and range in relation to the radar system, and wherein the radar system has a maximum unambiguous velocity, *vₘₐₓ,* comprising:
performing (S110) velocity disambiguation on the plurality of detections, thereby producing a disambiguated plurality of detections;
identifying (S120), amongst the disambiguated plurality of detections, one or more first detections associated with respective one or more first velocities and one or more first ranges, wherein the one or more first velocities are within a first interval from $\left⌈\frac{N - 1}{2}\right⌉ ⋅ 2 ⋅ {v}_{max}$ and downwards or within the first interval from - $\left⌈\frac{N - 1}{2}\right⌉ ⋅ 2 ⋅ {v}_{max}$ and upwards, wherein $\left⌈\frac{N - 1}{2}\right⌉$ is the least integer larger than or equal to $\frac{N - 1}{2}$*,* and wherein the first interval is set to a size of measurements errors or to a size of an expected velocity of the swaying objects;
for each first detection of the identified one or more first detections, wherein the first detection is associated with a first velocity of the one or more first velocities and a first range of the one or more first ranges:
on condition (C130) that there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and downwards or within the second interval around the first velocity plus $\left⌈\frac{N - 1}{2}\right⌉ ⋅ 2 ⋅ {v}_{max}$ if the first velocity is within the first interval from - $\left⌈\frac{N - 1}{2}\right⌉ ⋅ 2 ⋅ {v}_{max}$ and upwards, wherein the second interval is set to the same size as the first interval or to a size smaller than an expected velocity of objects that are of interest for detection such that detections in relation to the objects of interest are not identified as a detection of a swaying object, and wherein the second range is within a third interval around the first range, wherein the third interval set to a size of a range resolution of the radar system:
identifying (S140) the first detection and the second detection as detections from a swaying object.

2. A method (100) for identifying detections from swaying objects amongst a plurality of detections identified using a Time Division Multiplexed Multiple Input/Multiple Output, TDM-MIMO, Frequency Modulated Continuous Wave, FMCW, radar system including an odd number *N* ≥ 3 transmitter antennas where , wherein each detection of the plurality of detections is associated with a respective velocity and range in relation to the radar system, and wherein the radar system has a maximum unambiguous velocity, *vₘₐₓ,* comprising:
performing (S110) velocity disambiguation on the plurality of detections, thereby producing a disambiguated plurality of detections;
identifying (S120), amongst the disambiguated plurality of detections, one or more first detections associated with respective one or more first velocities and one or more first ranges, wherein the one or more first velocities are within a first interval from $\left⌈\frac{N - 1}{2}\right⌉ ⋅ 2 ⋅ {v}_{max}$ and upwards or within the first interval from - $\left⌈\frac{N - 1}{2}\right⌉ ⋅ 2 ⋅ {v}_{max}$ and downwards, wherein $\left⌈\frac{N - 1}{2}\right⌉$ is the least integer larger than or equal to $\frac{N - 1}{2}$*,* wherein the first interval is set to a size of measurements errors or to a size of an expected velocity of the swaying objects;
for each first detection of the identified one or more first detections, wherein the first detection is associated with a first velocity of the one or more first velocities and a first range of the one or more first ranges:
on condition (C130) that there, amongst the plurality of detections, is a second detection associated with a second velocity and a second range, wherein the second velocity is within a second interval around the first velocity minus $\left⌈\frac{N - 1}{2}\right⌉ ⋅ 2 ⋅ {v}_{max}$ if the first velocity is within the first interval from $\left⌈\frac{N - 1}{2}\right⌉ ⋅ 2 ⋅ {v}_{max}$ and upwards or within the second interval around the first velocity plus $\left⌈\frac{N - 1}{2}\right⌉ ⋅ 2 ⋅ {v}_{max}$ if the first velocity is within the first interval from - $\left⌈\frac{N - 1}{2}\right⌉ ⋅ 2 ⋅ {v}_{max}$ and downwards, wherein the second interval is set to the same size as the first interval or to a size smaller than an expected velocity of objects that are of interest for detection such that detections in relation to the objects of interest are not identified as a detection of a swaying object, and wherein the second range is within a third interval around the first range, wherein the third interval set to a size of a range resolution of the radar system:
identifying (S140) the first detection and the second detection as detections from a swaying object.

3. The method (100) of claim 1 or 2, further comprising:
suppressing (S144) the second detection.

4. The method (100) of any one of the previous claims, further comprising:
suppressing (S146) the first detection corresponding to the second detection.

5. The method (100) of claim 3, wherein suppressing (S144) the second detection is performed only on the further condition (C142) that the first detection has a radar cross section that is below a threshold value.

6. The method (100) of claim 4, wherein suppressing (S146) the first detection is performed only on the further condition (C142) that the second detection has a radar cross section that is below a threshold value.

7. The method (100) of any one of the previous claims, wherein each detection of the plurality of detections is further associated with a respective angle in relation to the radar system, wherein the one or more first detections are associated with respective one or more first horizontal angles, wherein the first detection is associated with a first horizontal angle of the one or more first horizontal angles, and wherein, in the condition (C130), the second detection is associated with a second horizontal angle, such that the second horizontal angle is within a fourth interval around the first horizontal angle.

8. The method (100) of claim 7, wherein the fourth interval is set based on the angle resolution of the radar system.

9. The method (100) of any one of the previous claims, wherein the first interval is set based on *vₘₐₓ.*

10. The method (100) of any one of the previous claims, wherein second interval is set based on *vₘₐₓ.*

11. The method (100) of any one of the previous claims, wherein third interval is set based on the range resolution of the radar system.

12. The method (100) of any one of the previous claims, wherein velocity disambiguation on the plurality of detections comprises correcting a velocity associated with a detection by $\left⌈\frac{N - 1}{2}\right⌉ ⋅ 2 ⋅ {v}_{max}$ being added to or subtracted from the velocity based on comparison of a first discrete Fourier transform on phases of a radar signal as received at antennas of the radar system, which radar signal corresponds to the detection, with a second discrete Fourier transform on the phases of the radar signal as received at the antennas of the radar system after changing sign of a phase of the radar signal as received at one or more antenna of the antennas of the radar system.

13. A non-transitory computer readable storage medium having stored thereon instructions for implementing the method according to any one of claims 1 to 12, when executed in a device having processing capabilities.

14. A device (400) for identifying detections from swaying objects amongst a plurality of detections identified using a Time Division Multiplexed Multiple Input/Multiple Output, TDM-MIMO, Frequency Modulated Continuous Wave, FMCW, radar system including *N* transmitter antennas, wherein each detection of the plurality of detections is associated with a respective velocity and range in relation to the radar system, and wherein the radar system has a maximum unambiguous velocity, *vₘₐₓ,* the device comprising circuitry (420) configured to execute functions (432) for implementing the method according to any one of claims 1 to 12.
